# EUROPÄISCHE PATENTANMELDUNG

(11) **EP 1 832 764 A2**
(43) Veröffentlichungstag der Anmeldung: **12.09.2007**
(21) Anmeldenummer: 07004115.7
(22) Anmeldetag: 28.02.2007
(51) Int. Cl.: F16C 33/30, F16C 41/00, F16D 57/02

(54) **Bremsbares Wälzlager**

(30) Priorität: 08.03.2006 DE 102006010618
(71) Anmelder: Schaeffler KG, 91074 Herzogenaurach (DE)
(72) Erfinder: Glück, Stefan, 97424 Schweinfurt (DE)

(57) **Zusammenfassung**

Die Erfindung betrifft ein Lager mit einem Innenring (2) und einem Außenring (3), wobei ein magnetisches Element (5) vorgesehen ist, welches entweder mit dem Innenring (2) oder mit dem Außenring (3) im Wesentlichen drehfest verbunden ist. Dabei ist in wenigstens einem Bereich zwischen dem Innenring (2) und dem Außenring (3) ein Medium (6) vorgesehen, dessen Viskosität sich in Abhängigkeit eines dieses durchsetzenden Magnetfeldes ändert.

## Beschreibung

### Gebiet der Erfindung

Die vorliegende Erfindung bezieht sich auf ein Lager und insbesondere auf ein Wälzlager. Im Stand der Technik besteht bei vielen Anwendungen der Bedarf an bremsbaren Wälzlagern. So ist es beispielsweise bei Maschinen wie Kreissägen gesetzlich vorgeschrieben, dass diese nach der Benutzung innerhalb einer bestimmten Zeit zum Stillstand kommen. Insbesondere bei Wellenanordnungen besteht ein derartiger Bedarf für eine Bremswirkung. Aus dem Stand der Technik sind verschiedene Möglichkeiten bekannt, um eine derartige Bremswirkung zu erzeugen.

So sind beispielsweise Reibungsbremsen bekannt, welche die Bremswirkung unter Verwendung von Bremsscheiben oder Bremstrommeln erzeugen. Solche Reibungsbremsen sind empfindlich gegenüber Schmierstoffen und auch verschleißanfällig. Daneben ist ein externes Bauteil sowie ein großer Bauraumbedarf nötig. Daneben ist die gewünschte Bremskraft nur schwer einstellbar beziehungsweise dosierbar und unter Umständen werden durch den Bremsvorgang laute Geräusche erzeugt.

Eine weitere aus dem Stand der Technik bekannte Variante ist eine so genannte Wirbelstrombremse. Diese Art Bremse ist relativ aufwändig und daneben ist auch hier ein externes Bauteil sowie ein insgesamt hoher Bauraumbedarf nötig.

Der vorliegenden Erfindung liegt daher die Aufgabe zugrunde, ein bremsbares Wälzlager zur Verfügung zu stellen, welches nur geringen Bauraum benötigt. Daneben soll die Bremsvorrichtung für das Lager direkt in diesem integrierbar sein, ohne die eigentliche Lagerfunktion zu beeinträchtigen. Vorteilhafterweise sollen die Bremsvorrichtung und das Lager eine Einheit bilden, damit keine aufwendigen Umgebungskonstruktionen für zum Beispiel das Ableiten der Bremskräfte notwendig sind.

Diese Aufgaben werden erfindungsgemäß durch ein Lager nach Anspruch 1 sowie eine Bremsvorrichtung nach Anspruch 15 gelöst. Vorteilhafte Ausführungsformen und Weiterbildungen sind Gegenstand der Unteransprüche. Es wird jedoch darauf hingewiesen, dass nicht notwendigerweise alle erfindungsgemäßen Aufgaben durch die Gegenstände aller Unteransprüche gelöst werden können.

Das erfindungsgemäße Lager weist einen Innenring auf, sowie einen Außenring. Dabei ist ein magnetisches Element vorgesehen, welches entweder mit dem Innenring oder mit dem Außenring im Wesentlichen drehfest verbunden ist. Erfindungsgemäß ist in wenigstens einem Bereich zwischen dem Innenring und dem Außenring ein Medium vorgesehen, dessen Viskosität sich in Abhängigkeit eines dieses durchsetzenden Magnetfeldes ändert.

Das magnetische Element kann an einem stehenden Innen- oder Außenring vorgesehen sein oder auch an einem sich bewegenden Innen- bzw. Außenring.

Vorzugsweise handelt es sich bei dem Medium um eine Flüssigkeit und besonders bevorzugt um eine magnetorheologische Flüssigkeit. Magnetorheologische Flüssigkeiten haben die Eigenschaft, dass sie ihre Viskosität um mehrere Größenordnungen in Abhängigkeit eines sie durchsetzenden Magnetfeldes ändern können. Der Ausdruck "magnetorheologisches Fluid" (MRF) bezeichnet damit Flüssigkeiten, die ähnlich wie Ferrofluide auf ein Magnetfeld reagieren, sich aber im Gegensatz zu diesem dabei verfestigen. Magnetorheologische Fluide bestehen beispielsweise aus einer Suspension von mikrometergroßen magnetischen Teilchen, die ein bis drei Größenordnungen größer sind als die Teilchen von Ferrofluiden. Die relativ großen Teilchen der magnetorheologischen Fluide bilden Ketten, wenn ein Magnetfeld angelegt wird. Dies erhöht die Viskosität des MRF und kann dieses sogar verfestigen, wenn eine einwirkende Druckkraft nicht groß genug ist, um die Ketten zu brechen.

Vorzugsweise ist das magnetische Element ein Elektromagnet. Der Vorteil dieser Ausführungsform besteht darin, dass der Elektromagnet und damit auch die Bremswirkung zu- oder abgeschaltet werden kann. Die Bremskraft ist über das durch das magnetische Element angelegte Magnetfeld sehr fein regulierbar. Außerdem ist durch den fluidinduzierten Reibschluss zwischen den bewegten Teilen ein sehr weiches Bremsverhalten erreichbar. Ein weiterer Vorteil besteht darin, dass die Bremsvorrichtung nicht quietscht. Bevorzugt ist der Elektromagnet regelbar und damit auch die Bremskraft einstellbar.

Bei einer weiteren bevorzugten Ausführungsform ist das magnetische Element an dem Außenring angeordnet und an dem Innenring ein Bremsring, der aus einem ferromagnetischen Material besteht. Diese Ausführungsform eignet sich insbesondere für Lagervarianten, bei denen der Außenring gegenüber der Umgebung steht und sich der Innenring bezüglich des Außenrings und damit auch bezüglich der Umgebung dreht.

Dieser Bremsring ist vorzugsweise drehfest mit dem Innenring verbunden. Bei einer anderen Ausführungsform wäre es auch möglich, den Ring als Drehfläche in den Innenring zu integrieren. Durch das Unter-Strom-Stellen des Elektromagneten kann zwischen diesem und dem ferromagnetischen Ring ein Magnetfeld erzeugt werden. Dieses Magnetfeld erhöht, wie oben erwähnt, die Viskosität der magnetorheologischen Flüssigkeit und damit wird eine durch die Höhe des Magnetfeldes steuerbare Bremswirkung erzielt.

Bei einer weiteren bevorzugten Ausführungsform ist das magnetische Element am Innenring angeordnet und an dem Außenring ein Bremsring aus einem ferromagnetischen Material. Diese Ausführungsform eignet sich insbesondere für solche Wälzlager, bei denen der Innenring gegenüber der Umgebung stillsteht und sich der Außenring relativ hierzu bewegt.

Bei einer weiteren bevorzugten Ausführungsform wird zwischen dem magnetischen Element und dem Bremsring ein Spalt gebildet, in dem das Medium angeordnet ist. In diesem Spalt können sehr hohe magnetische Felder zwischen dem magnetischen Element und dem Bremsring erzeugt werden. Damit ist es auch möglich, sehr hohe Viskositäten der magnetorheologischen Flüssigkeit zu erzeugen und damit eine hohe Bremswirkung.

Vorteilhaft ist der Bremsring im Wesentlichen drehfest mit dem Innenring oder dem Außenring verbunden.

Bei einer weiteren vorteilhaften Ausführungsform ist eine Vielzahl von magnetischen Elementen vorgesehen. Diese magnetischen Elemente sind vorzugsweise gleichmäßig in Umfangsrichtung des Wälzlagers vorgesehen. Daneben können die einzelnen magnetischen Elemente sowohl axial als auch radial, als auch in hiervon abweichender Richtung bezüglich des Wälzlagers angeordnet sein. Unter einer radialen Richtung wird dabei verstanden, dass die Pole des magnetischen Elements auf einer Gerade liegen, die im Wesentlichen radial bezüglich des Wälzlagers verläuft. Unter einer axialen Anordnung wird verstanden, dass die Pole auf einer Gerade angeordnet sind, die im Wesentlichen zu der Wälzlagerachse parallel ist.

Bei einer weiteren vorteilhaften Ausführungsform ist der Bremsring an der dem magnetischen Element zugewandten Oberfläche im Wesentlichen zylinderförmig ausgeführt. Dies bedeutet, dass der Bremsring hier glatt ausgeführt ist. Es wäre jedoch auch möglich, den Bremsring mit einer Verzahnung auszuführen (beispielsweise der Encoderring bei einem Drehzahlsensorlager).

Bei einer weiteren bevorzugten Ausführungsform ist an dem Außenring eine erste Aufnahmeteileinrichtung angeordnet und an dem Innenring eine zweite Aufnahmeteileinrichtung und die erste und die zweite Aufnahmeteileinrichtungen bilden einen Aufnahmeraum für das Medium. Dies bedeutet, dass das Medium räumlich durch die beiden Aufnahmeteileinrichtungen, welche zusammen einen bevorzugt flüssigkeitsdichten Aufnahmeraum bilden, begrenzt wird.

Bevorzugt wird wenigstens eine Aufnahmeteileinrichtung einteilig mit dem Außenring oder dem Innenring ausgebildet. Bei einer anderen vorteilhaften Ausführungsform ist wenigstens eine Aufnahmeteileinrichtung ein mit dem Außenring oder Innenring verbundenes Gehäuseteil. Es ist jedoch auch möglich, dass eine Aufnahmeteileinrichtung einteilig mit einem Ring ausgebildet und die andere Aufnahmeteileinrichtung ein mit dem anderen Ring verbundenes Gehäuseteil ist. Eine der Aufnahmeteileinrichtungen ist vorzugsweise selbst abschnittweise als Bremsring ausgeführt. Bei dieser Ausführungsform weist bevorzugt diese Aufnahmeteileinrichtung einen ringförmigen Abschnitt aus einem ferromagnetischen Material auf. Auch kann die gesamte Aufnahmeteileinrichtung aus einem ferromagnetischen Material hergestellt sein.

Die oben beschriebene Erfindung kann bei allen Lagergattungen, wie beispielsweise bei Wälz- oder Gleitlagern zum Einsatz kommen.

Die vorliegende Erfindung ist schließlich auf die Verwendung einer Flüssigkeit mit magnetorheologischen Eigenschaften für Lager und insbesondere für Wälzlager gerichtet. Wie oben ausgeführt, eigenen sich magnetorheologische Flüssigkeiten, deren Viskosität stark von einem an sie angelegten Magnetfeld abhängt, in besonderer Weise, um ein Lager gezielt abzubremsen oder in bevorzugten Drehstellungen zum Stillstand zu bringen.

Die vorliegende Erfindung ist weiterhin auf eine Bremsvorrichtung, insbesondere für ein Wälzlager gerichtet. Diese Bremsvorrichtung weist ein erstes Bremselement auf und ein zweites gegenüber diesem ersten Bremselement bewegliches Bremselement. Zwischen dem ersten Bremselement und dem zweiten Bremselement ist eine magnetorheologische Flüssigkeit angeordnet und an wenigstens einem der Bremselemente ein magnetisches Element. Vorzugsweise ist an dem jeweils anderem Bremselement ein Körper aus ferromagnetischen Material vorgesehen. Wie oben erwähnt, wird durch das Anlegen eines magnetischen Feldes an die magnetorheologische Flüssigkeit die Viskosität derselben erhöht. Auf diese Weise kann die Bewegung des ersten Bremselementes gegenüber dem zweiten Bremselement gebremst werden und damit eine Verzögerung auftreten.

Vorzugsweise dienen die Bremselemente auch als Aufnahmeteileinrichtungen, die - gegebenenfalls mit weiteren Elementen - einen Aufnahmeraum für die magnetorheologische Flüssigkeit bilden.

Diese Bremsvorrichtung kann, wie oben erwähnt, beispielsweise an einem Wälzlager angeordnet werden. Es ist jedoch auch möglich, dass die Bremselemente gegeneinander eine axiale Bewegung vollziehen und diese Bewegung gebremst werden soll. Vorzugsweise wird zwischen dem ersten Bremselement und dem zweiten Bremselement ein im Wesentlichen flüssigkeitsdichter Aufnahmeraum gebildet, in dem die magnetorheologische Flüssigkeit angeordnet ist.

Weitere Vorteile und Ausführungsformen ergeben sich aus den beigefügten Zeichnungen.

### Darin zeigen:

- Fig. 1: eine schematische Darstellung eines erfindungsgemäßen Lagers; und
- Fig. 2: eine Draufsicht auf das Lager aus Fig. 1 entlang der Linie A-A.

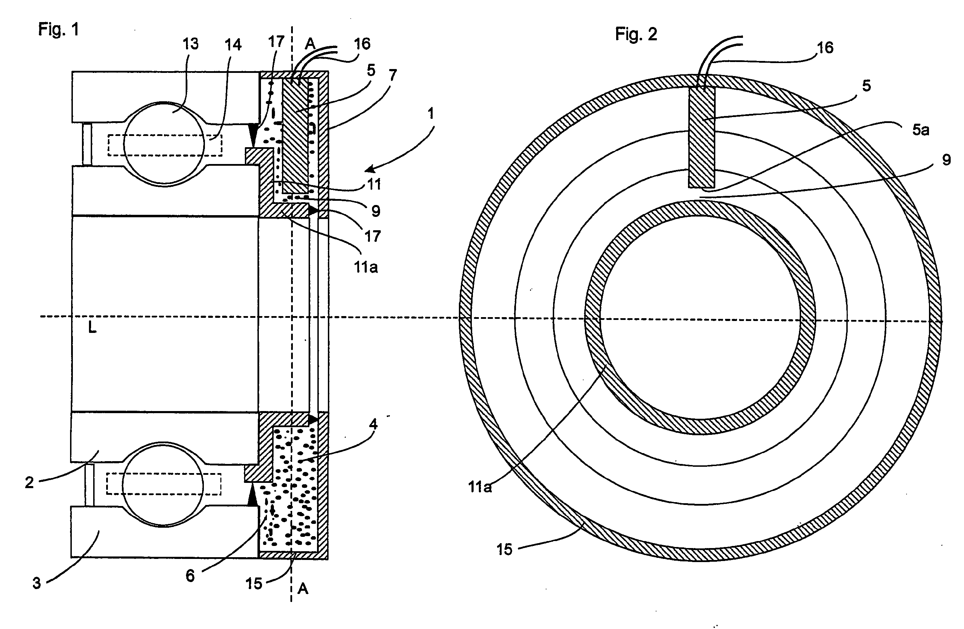

Fig. 1 zeigt ein erfindungsgemäßes Wälzlager 1. Dieses Wälzlager 1 weist einen Innenring 2 und einen Außenring 3 auf. Dabei ist der Außenring 3 mit einer Vielzahl von Wälzkörpern 13, die in einem Wälzkörperkäfig 14 angeordnet sind, drehbar gegenüber dem Innenring 2 gelagert. Genauer, steht bei dieser Ausführungsform der Außenring gegenüber der Umgebung still.

An dem Außenring 3 ist eine erste Aufnahmeteileinrichtung 15 in Form eines Zusatzgehäuses 15 angeordnet. Dieses Gehäuse ist bei dieser Ausführungsform vergleichbar mit einem Sensorgehäuse bei Drehzahlsensorlagern. Bei einer anderen Ausführungsform wäre es jedoch auch möglich, die Aufnahmeteileinrichtung 15 einteilig mit dem Außenring 3 auszubilden, also beispielsweise den Bauraum für die Aufnahme der Bremseinrichtung direkt als Absatz in den Außenring 3 einzudrehen. Die erste Aufnahmeteileinrichtung 15 ist drehfest mit dem Außenring 3 verbunden.

An dem Innenring 2 ist eine zweite Aufnahmeteileinrichtung 11 in Form eines Bremsrings angeordnet und drehfest mit dem Innenring 2 verbunden. Auch hier wäre es in einer weiteren Ausführungsform möglich, die zweite Aufnahmeteileinrichtung 11 als Drehfläche direkt in den Innenring 2 zu integrieren.

Die zweite Aufnahmeteileinrichtung 11 beziehungsweise der Bremsring besteht idealerweise aus einem ferromagnetischen Material. Es wäre jedoch auch möglich, die zweite Aufnahmeteileinrichtung 11 und den Bremsring als separate jedoch miteinander verbundene Elemente auszuführen.

Die erste Aufnahmeteileinrichtung 15 ist mit einem Deckel 7 verschlossen und so ausgeführt, das sich zusammen mit der ersten Aufnahmeteileinrichtung 15, der zweiten Aufnahmeteileinrichtung 11 sowie zwei Dichtungen 17, ein flüssigkeitsdichter Raum 4 ergibt, der mit einer magnetorheologischen Flüssigkeit 6 gefüllt ist.

An der ersten Aufnahmeteileinrichtung 15 ist ein magnetisches Element 5 in Form einer Magnetspule angebracht, die über ein Kabel 16 mit Strom versorgt werden kann. Zwischen dem magnetischen Element 5 und der zweiten Aufnahmeteileinrichtung 11 bildet sich so ein Spalt 9, in dem sich magnetorheologische Flüssigkeit 6 befindet. Wird das magnetische Element von einem elektrischen Strom durchflossen, bildet sich ein Magnetfeld aus, das den Spalt 9 durchsetzt und dort die Viskosität der magnetorheologischen Flüssigkeit 6 erhöht. Durch die dadurch erhöhte Reibung wird das Drehmoment von der zweiten Aufnahmeteileinrichtung 11 auf das magnetische Element 5 und damit die erste Aufnahmeteileinrichtung 15 übertragen und so der Innenring 2 des Lagers gebremst.

Es sind jedoch unterschiedliche Ausführungsformen dieses Lagers denkbar. So könnte, wie eingangs erwähnt, eine Vielzahl von magnetischen Elementen 5 in Umfangsrichtung um die Achse des Wälzlagers angeordnet sein. Auch könnten magnetische Elemente beispielsweise an dem Deckel 7 angeordnet sein und sich in Längsrichtung des Wälzlagers, genauer in Richtung des Abschnitts 11a der zweiten Aufnahmeteileinrichtung erstrecken. In diesem Falle würde ein magnetisches Feld in Richtung der Lagerachse L erzeugt werden. Auch wäre es möglich, die zweite Aufnahmeteileinrichtung 11 beziehungsweise den Bremsring als Blechteil auszuführen. Bei der in Fig. 1 gezeigten Ausführungsform nimmt der Abschnitt 11a gleichzeitig die Funktion des Bremsrings wahr.

Schließlich wäre es auch möglich, dass das Lager insgesamt passiv ausgeführt wird, dass heißt, dass das Magnetfeld nicht über Elektromagnete eingebracht wird, sondern über Permanentmagnete. Derartige Permanentmagnete könnten extern angebracht werden oder in speziell vorgesehene Halterungen am Lager. Auch wäre es möglich, derartige Permanentmagnete fest zu montieren und deren magnetischen Fluß im Spalt 9 beispielsweise über bewegliche Bleche an- und auszuschalten.

Außerdem wäre es, wie eingangs erwähnt, möglich, den Bremsring 11a nicht am Innenring 2 sondern am Außenring 3 des Lagers vorzusehen.

Die sich ergebene Komponente aus den beiden Aufnahmeteileinrichtungen 11 und 15 sowie dem magnetischen Element 5, könnte auch an anderen sich bezüglich einander drehenden Körpern angeordnet sein und ist daher nicht darauf beschränkt, an einem Wälzlager angebracht zu werden.

Auch könnten Modifikationen vorgesehen werden, um eine Bewegung in Längsrichtung zu dämpfen, beispielsweise eine Bewegung eines Kolbens gegenüber einem Zylinder. Auf diese Weise könnten beispielsweise Dämpfungsmechanismen oder Federdämpfer entwickelt werden, deren Dämpfungswirkung in Abhängigkeit von einem an die Flüssigkeit angelegten magnetischen Feld variiert werden kann.

Mögliche Anwendungen der Erfindung sind vor allem solche, bei denen eine externe Bremse den vorhandenen Bauraum sprengen würde oder solche, bei denen in stark schmierstoffhaltiger Umgebung gebremst werden muss, was im Falle einer herkömmlichen Bremsvorrichtung beispielsweise dazu führen würde, dass etwa eine Bremsscheibe durchrutschen würde. Auch Anwendungen, bei denen der Bremsvorgang möglichst geräuschlos stattfinden soll, eignen sich für die hier beschriebene Erfindung.

Daneben könnte die erfindungsgemäße Bremsvorrichtung auch zur Dämpfung von Drehschwingungen verwendet werden.

Figur 2 zeigt eine Draufsicht auf das Lager aus Figur 1. Man erkennt, dass zwischen der zweiten Aufnahmeteileinrichtung 11 und dem magnetischen Element 5 beziehungsweise der Oberfläche 5a des magnetischen Elements 5 ein Spalt 9 gebildet wird. Durch das Anschalten des magnetischen Elements 5 beziehungsweise das Beaufschlagen mit elektrischem Strom wird die Viskosität der magnetorheologischen Flüssigkeit 6 insbesondere in dem Spalt 9 und damit die Bremswirkung auf das gesamte Lager erhöht.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Wälzlager
- 2: Innenring
- 3: Außenring
- 4: flüssigkeitsdichter Raum
- 5: magnetisches Element
- 5a: Oberfläche des magnetischen Elements 5
- 6: magnetorheologische Flüssigkeit
- 7: Deckel
- 9: Spalt
- 11: zweite Aufnahmeteileinrichtung
- 11 a: Abschnitt der zweiten Aufnahmeteileinrichtung 11, Bremsring
- 13: Wälzkörper
- 14: Wälzlagerkäfig
- 15: erste Aufnahmeteileinrichtung
- 16: Kabel
- 17: Dichtung
- L: Lagerachse

## Patentansprüche

1. Lager mit einem Innenring (2) und einem Außenring (3), wobei ein magnetisches Element (5) vorgesehen ist, welches entweder mit dem Innenring (2) oder mit dem Außenring (3) im Wesentlichen drehfest verbunden ist,
**dadurch gekennzeichnet, dass**
in wenigstens einem Bereich zwischen dem Innenring (2) und dem Au-βenring (3) ein Medium (6) vorgesehen ist, dessen Viskosität sich in Abhängigkeit eines dieses durchsetzenden Magnetfeldes ändert.

2. Lager nach Anspruch 1,
**dadurch gekennzeichnet, dass**
das Medium (6) eine magnetorheologische Flüssigkeit ist.

3. Lager nach wenigstens einem der vorangegangenen Ansprüche,
**dadurch** gekekennzeichnet, dass
das magnetische Element (5) ein Elektromagnet (5) ist.

4. Lager nach wenigstens einem der vorangegangenen Ansprüche,
**dadurch gekennzeichnet, dass**
das magnetische Element (5) an dem Außenring (3) angeordnet ist und an dem Innenring (2) ein Bremsring (11a) aus einem ferromagnetischen Material vorgesehen ist.

5. Lager nach wenigstens einem der vorangegangenen Ansprüche,
**dadurch gekennzeichnet, dass**
das magnetische Element (5) an dem Innenring (2) angeordnet ist und an dem Außenring (3) ein Bremsring (11a) aus einem ferromagnetischen Material vorgesehen ist.

6. Vorrichtung nach wenigstens einem der vorangegangenen Ansprüche 4
- 5,
**dadurch gekennzeichnet, dass**
zwischen dem magnetischen Element (5) und dem Bremsring (11a) ein Spalt (9) gebildet wird, in dem das Medium (6) angeordnet ist.

7. Lager nach wenigstens einem der vorangegangenen Ansprüche 4 - 6,
**dadurch gekennzeichnet, dass**
der Bremsring (11a) im Wesentlichen drehfest mit dem Innenring (2) oder dem Außenring (3) verbunden ist.

8. Lager nach wenigstens einem der vorangegangenen Ansprüche,
**dadurch gekennzeichnet, dass**
eine Vielzahl von magnetischen Elementen (5) vorgesehen ist.

9. Lager nach wenigstens einem der vorangegangenen Ansprüche 5 - 8,
**dadurch gekennzeichnet, dass**
der Bremsring (11a) an der dem magnetischen Element (5) zugewandten Oberfläche im Wesentlichen zylinderförmig ausgeführt ist.

10. Lager nach wenigstens einem der vorangegangenen Ansprüche,
**dadurch gekennzeichnet, dass**
an dem Außenring (3) eine erste Aufnahmeteileinrichtung (15) angeordnet ist und an dem Innenring eine zweite Aufnahmeteileinrichtung (11) und die erste und zweite Aufnahmeteileinrichtung (15,11) einen Raum (4) für das Medium (6) bilden.

11. Lager nach Anspruch 7,
**dadurch gekennzeichnet, dass**
der Raum (4) im Wesentlichen flüssigkeitsdicht ist.

12. Lager nach wenigstens einem der vorangegangenen Ansprüche 10 - 11,
**dadurch gekennzeichnet, dass**
wenigstens eine Aufnahmeteileinrichtung (15, 11) einteilig mit dem Außenring (2) oder dem Innenring (3) ausgebildet ist.

13. Lager nach wenigstens einem der vorangegangenen Ansprüche 10 - 12,
**dadurch gekennzeichnet, dass**
wenigstens eine Aufnahmeteileinrichtung (15, 11) ein mit dem Außenring (2) oder dem Innenring (3) verbundenes Gehäuseteil ist.

14. Verwendung einer Flüssigkeit mit magnetorheologischen Eigenschaften für ein Lager.

15. Bremsvorrichtung mit einem ersten Bremselement (11a), und einem gegenüber dem ersten Bremselement beweglichen zweiten Bremselement (15),
**dadurch gekennzeichnet, dass**
zwischen dem ersten Bremselement (11a) und dem zweiten Bremselement (15) eine magnetorheologische Flüssigkeit (6) angeordnet ist.

16. Bremsvorrichtung nach Anspruch 15,
**dadurch gekennzeichnet, dass**
an einem Bremselement (11a, 15) ein magnetisches Element (5) vorgesehen ist.
